# EUROPEAN PATENT SPECIFICATION

(11) **EP 2 727 706 B1**
(45) Date of publication and mention of the grant of the patent: **02.12.2015**
(21) Application number: 13189634.2
(22) Date of filing: 22.10.2013
(51) Int. Cl.: B29C 49/68

(54) **Heating system for oven for preforms**
Heizsystem für Ofen für Vorformlinge
Système de chauffage de préformes pour four

(30) Priority: 31.10.2012 IT MI20121855
(43) Date of publication of application: 07.05.2014
(73) Proprietor: SMI S.p.A., 24121 Bergamo (IT)
(72) Inventor: Zacche, Vanni, I-24121 BERGAMO (IT)
(74) Representative: Croce, Valeria

(56) References cited:
- EP-A1- 2 216 161
- DE-A1- 19 909 542
- DE-U1-202004 010 454
- US-A- 6 005 223
- US-B1- 6 361 301

## Description

The present invention relates to an oven for preforms and particularly to a heating system to be used in said oven, which comprises one or more infrared heating modules.

Obtaining containers by blowing of special preforms of plastic material suitably heated within a mould having a desired shape is a widely used technique in the packaging field, in particular for manufacturing bottles for beverages.

There are substantially two different techniques, simple blowing and stretch-blowing, providing for the pneumatic blowing and the concomitant mechanical stretching of the preform in the mould. In both cases, the preforms have to reach the blowing or stretch-blowing machine in a thermal condition corresponding to the softening point of the material, so as to be able to be plastically deformed within the moulds.

Softening of preforms is carried out in special ovens, which comprise a series of heating modules arranged in series along the path of the preforms. Related prior art heating modules and ovens are described in documents EP2216161, US36101B1 and DE202004010454U1.

In order to maximize both the thermal efficiency and the dimensions of the oven, it is desired that the preforms are introduced and made to slide within the oven at the closest pitch as possible.

In fact, the problem of the loss of the heat generated by the heating modules is a particularly felt issue, since it dictates the energy consumption, which, for such oven, is always extremely high.

The object of the present invention is to provide a heating system of preforms in an oven dedicated thereto, specifically an infrared oven, allowing maximizing the thermal efficiency, hence obtaining considerable energy savings.

A further object of the invention is to provide a heating system of preforms allowing obtaining an optimal energy distribution.

Such and other objects are achieved by a heating system for preforms as set forth in the appended claims, the definitions of which are an integral part of the present description.

Further characteristics and advantages of the present invention will be more clearly apparent from the description of some implementation examples, given herein below by way of indicative, non-limiting example, with reference to the following Figures:
Fig. 1 represents a plan schematic view of an oven-blowing machine assembly;
Fig. 2 represents a simplified schematic view in cross-section of a heating module according to the invention;
Fig. 3A represents a perspective view of a heating module according to the invention;
Fig. 3B represents a cross-sectional view of the heating module of figura 3A;
Fig. 4A represents a perspective view of a detail of the heating module of the invention according to the direction A of Fig. 3B;
Fig. 4B represents a perspective view of the detail of Fig. 4A according to the direction B of Fig. 3B;
Fig. 5A represents a perspective view of a different detail of the heating module of the invention according to the direction A of Fig. 3B;
Fig. 5B represents a perspective view of the detail of Fig. 5A according to the direction B of Fig. 3B.

With reference to the Figures, an oven for preforms is indicated with the number 1, which oven is operatively connected with handling means 2, 3 of the preforms, entering and exiting the oven 1, respectively.

Such handling means 2, 3 are typically composed of distribution stars comprising a series of gripping means 4, for example, notches, recesses, or pliers, adapted to engage the preforms, for example, at the neck.

The handling means 3 for the preforms exiting the oven 1 are in turn operatively connected with a blowing machine 5 (the term "blowing machine" as used in the present description means any type of blowing or stretch-blowing machine) that comprises a plurality of moulds 6 in which the heated preform is inserted and from which it comes out in the shape of a blow molded (or stretch-blow molded) bottle.

The blowing machine 5 is in turn operatively connected with distribution means 7, typically a distribution star, adapted to draw the blow moulded bottles exiting the blowing machine and to transfer them, by a suitable transport system, to the next operative unit. To this aim, the distribution star 7 comprises a plurality of notches 4' adapted to engage the neck of the blow moulded bottles.

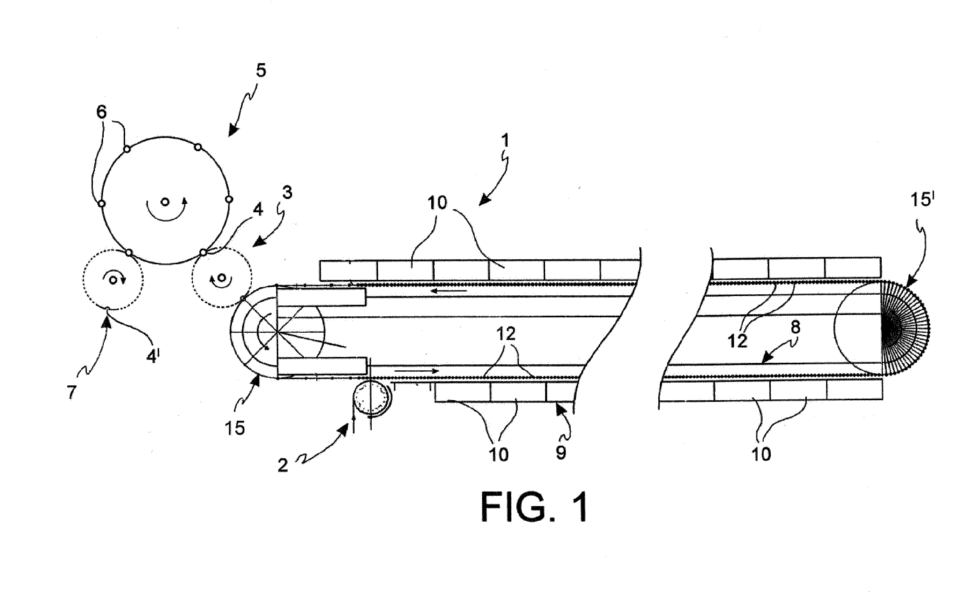

A path of the preforms is thus defined, which is indicated in Fig. 1 by the directions of the arrows, from their supply to the oven 1 to the entering thereof into the moulds 6 of the blowing machine 5.

The oven 1 comprises transport means 8, adapted to handle the preforms P along a path inside the same oven, and to make them to rotate about the vertical axis thereof, and heating means 9.

The heating means 9 are composed of a plurality of heating modules 10 aligned along the preform path.

The transport means 8 comprise a plurality of mandrels 12 each being adapted to engage a preform. The preform path typically comprises two rectilinear lengths and two curvilinear lengths, connecting at the two ends the rectilinear lengths according to an arc-of-circle-shaped path. Corresponding driving wheels 15, 15' are arranged at said curvilinear lengths.

The preforms P conventionally comprise a hollow body B - which will be blow moulded to form the container -, a neck portion C on which a thread or a joint geometry is typically obtained, and a flange F separating the hollow body B from the neck portion C.

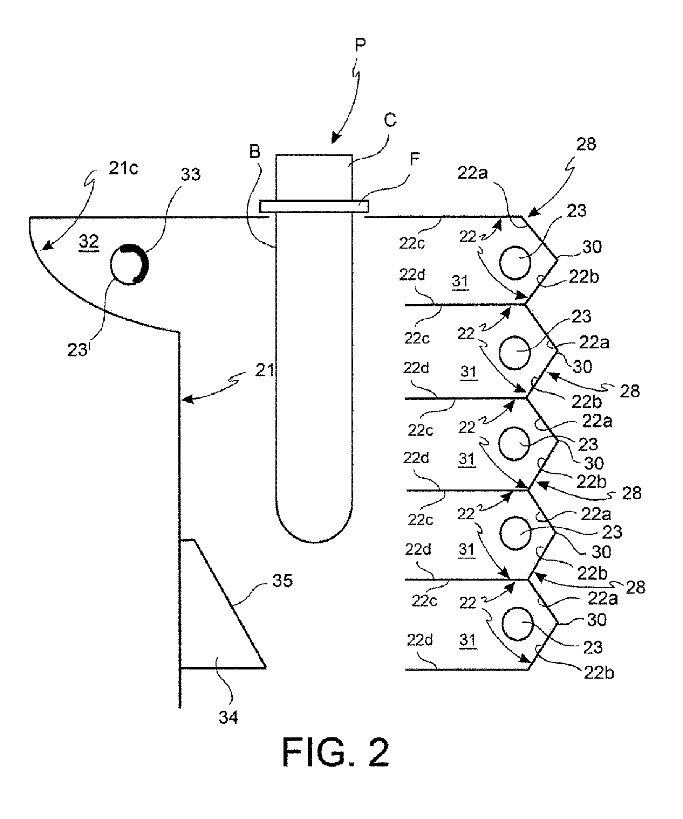

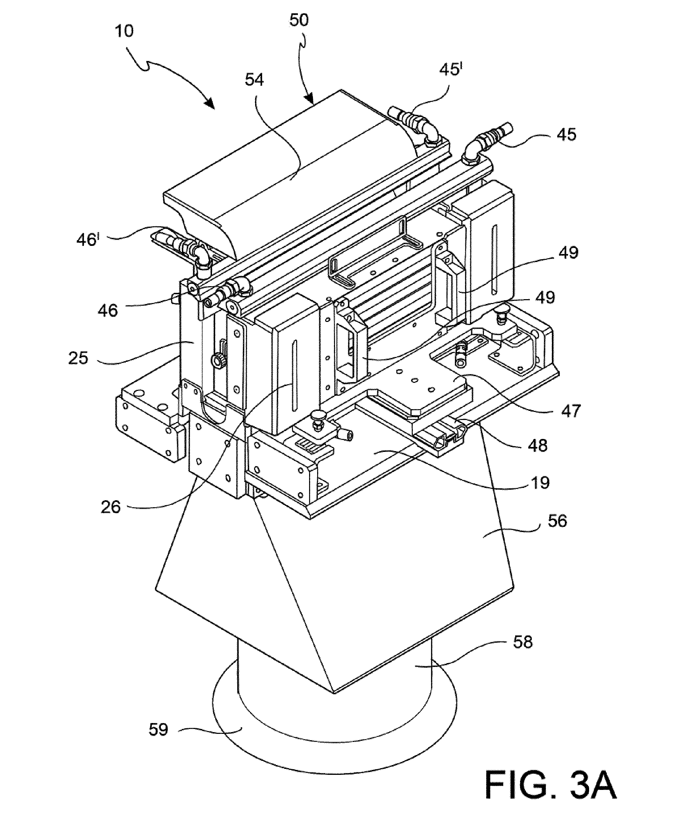

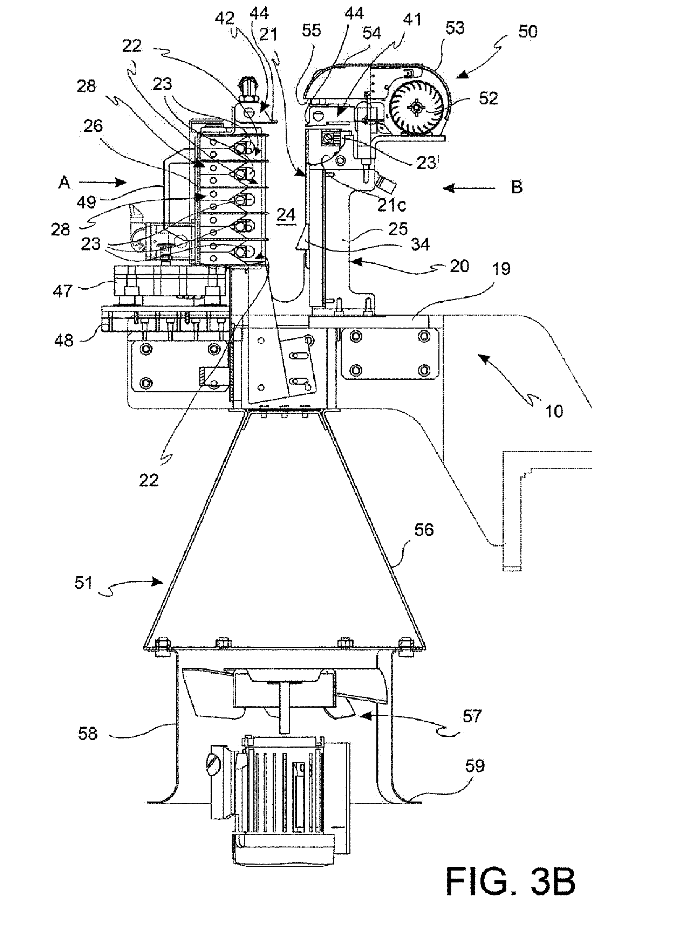

The heating system of preforms according to the present invention comprises at least one heating module 10 as shown in Fig. 3A and 3B and, in a simplified schematic form, in Fig. 2.

The heating module 10 comprises a base plate 19 on which a body 20 with a fork-shaped structure, i.e., having a U-shaped cross-section, is mounted. The fork-shaped body 20 comprises a first side panel 25 and a second side panel 26, said panels 25, 26 mutually facing so as to create a gap 24 having such a shape and dimensions as to let the preform P moving along the transport means 8 passing therebetween.

The second panel 26 comprises a plurality of vertically arranged infrared lamps 23. Lamps of a conventional type and having a tubular shape are used. Typically, 5 lamps, so as to cover the whole height of the preform P, are used.

The panels 25, 26 comprise reflecting surfaces 21, 22 that are opposite and oriented so as to convey the thermal radiations on the preform surface.

First reflecting surfaces 21 are arranged on the panel 25 and facing the lamps 23, so as to reflect the thermal radiation within the gap 24, hence against the preform P which is passing.

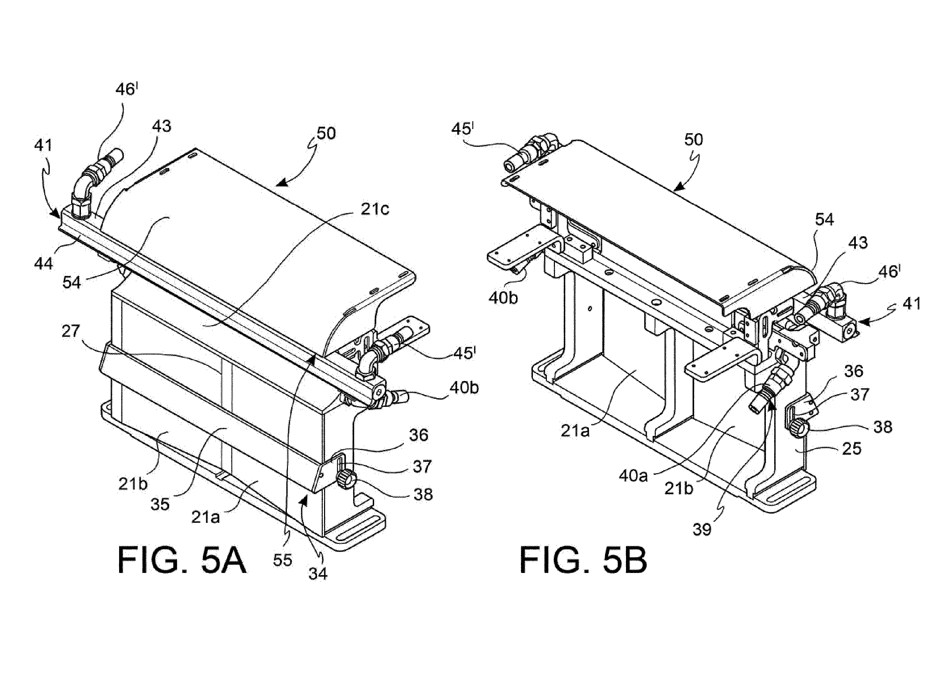

In some embodiments, with reference to the Figs. 5A and 5B, the first reflecting surfaces 21 comprise first 21a and second 21b mirror elements arranged on planes incident along a vertical corner 27, so as to create an open V with a concavity facing the gap 24. In this manner, a convergence effect of the thermal radiations inwards of the cavity 24 is obtained.

The second reflecting surfaces 22 are arranged on the second panel 26 and comprise a plurality of vertically arranged recesses 28, each of which housing an infrared lamp 23.

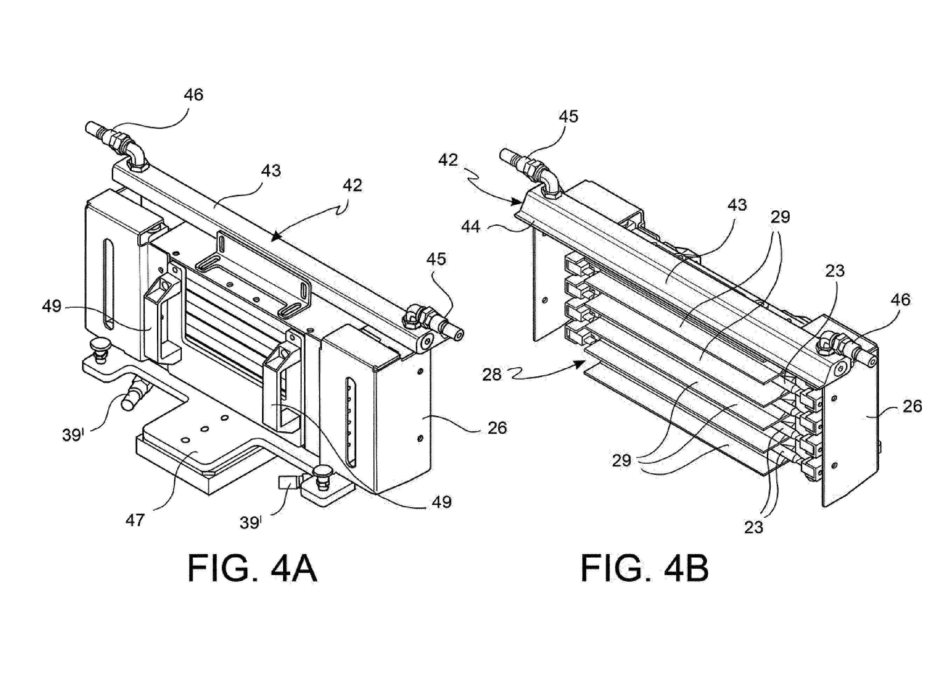

As shown in Figs. 2, 3B, and 4B, the recesses 28 extend parallel along the entire length of the lamps 23, hence for most of the cavity 24 length. Each recess 28 houses a cavity 31 and comprises inner portions 22a, 22b, and upper and lower side boards 22c, 22d forming a plurality of parallel tabs 29. The inner portions 22a, 22b are arranged on planes incident along a horizontal corner 30, so as to create a V with a concavity facing inwards of the cavity 31. This configuration of the reflecting surfaces 22 allows each of the recesses 28 focusing the thermal radiations toward a portion of the preform P surface with a low incidence angle, thereby ensuring an optimal exploitation of the emitted thermal energy. By the term "low incidence angle" is meant an incidence angle that is less than 20°, as calculated relative to the perpendicular of the generator of the hollow body B of the preform P.

In some embodiments, with reference to the Figs. 2, 3B, and 5A, the first reflecting surfaces 21 comprise a third mirror element 21c arranged in the upper portion of the first side panel 25, above the first and second mirror elements 21a, 21b to form a longitudinal cavity 32 in which an infrared a lamp 23' is housed.

The mirror element 21c has a concavity oriented towards the portion of the preform P arranged immediately under the flange F. In fact, such portion typically has the need of a thermal profile that is different with respect to the remaining part of the hollow body C, thus it requires dedicating and focusing an energy amount that is not equal to the rest of the hollow body for a proper softening.

The lamp 23' arranged within such longitudinal cavity 32 has a surface portion 33, i.e., the one facing the gap 24, which is screened. In this manner, the preform P does not receive direct thermal radiations, but only the radiations reflected by the mirror element 21c.

In some embodiments, with reference to the Figs. 2, 3A, and 5A, a mobile mirror element 34 protruding within the gap 24 and located under the space taken by the preform P is associated to the first reflecting surfaces 21.

The mobile mirror element 34 comprises a mirror bar 35, inclined with respect to the longitudinal vertical plane intersecting the gap 24, and two side boards 36 arranged at the ends of the mirror bar 35. The side boards 36 flank the sides of the panel 25 and have a vertical loop 37. Stop means 38, for example, a stop screw, are associated to said vertical loops 37 and to the sides of the panel 25. In this manner, it is possible to height adjust the mobile mirror element 34 according to the height of the preform P that undergoes a heating and to secure it at the desired point. In fact, the function of the mobile mirror element 34 is to reflect part of the thermal radiations emitted by the lamps 23 towards the preform bottom, with otherwise would remain partially screened.

In some embodiments, the mirror bar 35 inclination ranges between 20° and 30° to a vertical plane.

In some embodiments, the reflecting surfaces 21, 22 are gold-plated, so as to impart them the highest reflectance as possible.

Both the first and the second side panels 25, 26 comprise cooling means 39, 39' of the reflecting surfaces 21, 22.

In the embodiment shown in the Figures, such cooling means 39, 39' consist in a cooling system with a coolant fluid, typically water, glycol, or mixtures thereof, which is circulated in the panel 25, 26, behind the reflecting surfaces 21, 22, through an inlet connector 40a and an outlet connector 40b. In fact, an excessive overheating of the reflecting surfaces 21, 22 would alter over time the thermal profile which the preforms P have to be subjected to.

The side panels 25, 26 further comprise respective screening profiles 41, 42 for the flange F of the preform P. The screening profiles comprise a hollow bar 43 having an elongating tongue 44 extending almost up to contact the flange F of the preform. The hollow bar 43 comprises cooling means, consisting in a cooling system with coolant fluid, typically water, glycol, or mixtures thereof, which is circulated in the hollow bar 43 through inlet 45, 45' and outlet 46, 46' connectors. The cooling means of the screening profiles 41, 42 have the function of maintaining at a low temperature the optical screening structure of the flange F, hence the neck portion C of the preform P, which would be damaged at high temperatures. In fact, this portion has not to undergo alterations during the blowing process of the container.

The screening profiles 41, 42 may be height and width adjustable, so as to adapt the module 10 to the different types of preforms P.

In some embodiments, with reference to the Figures, the second side panel 26, housing the plurality of infrared lamps 23, is removable, so as to allow maintaining the same panel 26 and accessing the side panel 25 facing it. To this aim, the panel 26 is mounted on slide means 47 that are slidable on a track 48 integral to the base plate 19. Grasping means 49 are arranged to promote the panel 26 withdrawal.

In other embodiments, the first side panel 25 could be removable, while the other panel 26 could be fixed, or both could be removable.

The heating module 10 further comprises means for the circulation of air within the gap 24. Such air circulation means promote a homogeneous distributing of heat about the preform P, avoiding undesired thermal build-ups in certain areas of the gap 24.

The air circulation means comprise ventilation means 50 and suction means 51.

The ventilation means 50 are arranged on the first side panel 25 and comprise a fan 52 housed in a case 53. The case 53 comprises a baffle 54 ending in a lamellar opening 55 arranged above the reflecting surfaces 21, so as to send a flow of coolant fluid tangential to the reflecting surfaces 21.

The suction means 51 are arranged below the base plate 19 and communicate with the gap 24 through special openings that are present in said base plate 19.

The suction means 51 comprise a suction hood 56 that is flared downwards, below which a suction device 57 is arranged, typically a blade suction device. The suction device 57 is contained in a case 58 that may comprise a base flange 59 for securing the module 10 to the oven floor or structure.

In some embodiments, the suction flow rate is higher than the output flow rate of the ventilation means 50.

The advantages of this solution are several.

As stated before, the arrangement of the reflecting surfaces 21, 22 according to the invention ensured an efficient collimation of the thermal radiations towards the preform P. In fact, the thermal radiations, following the various reflections which they are subjected to, reach the portion of preform surfaces in a condition of substantial parallelism. Therefore, the typical cone-shaped diffusion of the thermal radiations is avoided, according to which part of the radiations hits the preform surface with low incidence angles, thereby decreasing the efficiency thereof. In fact, in the conventional ovens this problem is solved by arranging a number of lamps such as to obtain a partial overlapping of the radiation cones. Of course, this results in an increase of the operating costs for the oven.

Furthermore, the fact that the thermal radiations reaching the preform surface are substantially parallel avoids that the distance of the lamps from the preform has to be adjusted according to the diameter thereof. This fact is solved by a constructive simplification of the module 10.

The arrangement of the mirror element 21c and the corresponding lamp 23', as well as the mobile mirror 34, allows focusing part of the thermal radiation to the critical areas of the preform P, thus ensuring a complete control of the heating functions thereof.

To this aim, the cooling air circulation system is also configured to ensure a homogeneous distribution of the heat.

By the heating module 10 according to the invention, it is possible to decrease the number of lamps compared to the conventional modules, reducing it to half of the lamps to be used. Furthermore, lamps will be able to be used with a power that is less than those typically employed (for example, 1500 W instead of 2500 W), thereby the energy consumption is substantially reduced.

It shall be apparent that only some particular embodiments of the present invention have been described, to which those skilled in the art will be able to make all those modifications that are necessary for the adaption thereof to particular applications, without for this departing from the protection scope of the present invention.

## Claims

1. A heating module (10) for ovens (1) for heating preforms (P), wherein said preforms (P) comprise a hollow body (B), a neck portion (C) and a flange (F) separating the hollow body (B) from the neck portion (C), said module (10) comprising a first side panel (25) and a second side panel (26), said side panels (25, 26) being mounted on a base plate (19) and mutually facing so as to create a gap (24) having such a shape and dimensions as to let a moving preform (P) passing therebetween, wherein said side panels (25, 26) comprise infrared lamps (23, 23') and first and second reflecting surfaces (21, 22) that are opposite and oriented so as to convey the thermal radiations on the preform surface, wherein the reflecting surfaces (22) of the second side panel (26) are configured so that the thermal radiations hit the preform surface with a low incidence angle, **characterized in that** said first reflecting surfaces (21) comprise a mirror element (21c) arranged in the upper portion of said first side panel (25) to form a longitudinal cavity (32) in which an infrared lamp (23') is housed, wherein said mirror element (21c) has a concavity oriented towards the portion of the preform (P) arranged immediately under the flange (F).

2. The heating module (10) according to claim 1, wherein said second reflecting surfaces (22) arranged on the second side panel (26) comprise a plurality of vertically arranged recesses (28), each of which housing an infrared lamp (23).

3. The heating module (10) according to claim 2, wherein each recess (28) houses a cavity (31) and comprises inner portions (22a, 22b) and upper and lower side boards (22c, 22d) forming a plurality of parallel tabs (29).

4. The heating module (10) according to claim 3, wherein said inner portions (22a, 22b) are arranged on planes incident along an horizontal corner (30), so as to create a V with a concavity facing inwards of the cavity 31.

5. The heating module (10) according to any one of the claims 1 to 4, wherein said first reflecting surfaces (21) arranged on said first side panel (25) comprise first (21a) and second (21b) mirror elements arranged on planes incident along a vertical corner (27), so as to create an open V with a concavity facing the gap (24).

6. The heating module (10) according to any one of claims 1 to 5, wherein said lamp (23') arranged within said longitudinal cavity (32) has a screened surface portion (33), said surface portion (33) facing the gap (24).

7. The heating module (10) according to any one of the claims 1 to 6, wherein a mobile mirror element (34) protruding within the gap (24) and located under the space taken by the preform (P) is associated to said first reflecting surfaces (21) of said first side panel (25).

8. The heating module (10) according to claim 7, wherein said mobile mirror element (34) is vertically slidable and comprises a mirror bar (35), inclined with respect to the longitudinal vertical plane intersecting the gap (24).

9. The heating module (10) according to claim 8, wherein said mobile mirror element (34) comprises two side boards (36) arranged at the ends of the mirror bar (35), so as to flank the sides of the first side panel (25), and have a vertical loop (37), stop means (38) being associated to said vertical loops (37) and to the sides of the panel (25) so as to height adjust the mobile mirror element (34) according to the height of the preform (P) and secure it at the desired point.

10. The heating module (10) according to any one of the claims 1 to 9, wherein said first and second side panels (25, 26) comprise cooling means (39, 39') of said reflecting surfaces (21, 22).

11. The heating module (10) according to claim 10, wherein said cooling means (39, 39') consist in a cooling system with a coolant fluid, such as water, glycol, or mixtures thereof, which is circulated in the panel (25, 26), behind the respective reflecting surfaces (21, 22), through an inlet connector (40a) and an outlet connector (40b).

12. The heating module (10) according to any one of the claims 1 to 11, wherein said side panels (25, 26) comprise respective screening profiles (41, 42) for the flange (F) of the preform (P), said screening profiles (41, 42) comprising a hollow bar (43) having an elongating tongue (44) extending almost up to contact the flange (F) of the preform, wherein said hollow bar (43) comprises cooling means consisting in a cooling system with coolant fluid such as water, glycol, or mixtures thereof, which is circulated in the hollow bar (43) through inlet (45, 45') and outlet (46, 46') connectors.

13. The heating module (10) according to claim 12, wherein said screening profiles (41, 42) are height and width adjustable.

14. The heating module (10) according to any one of the claims 1 to 13, wherein said second side panel (26) is removable.

15. The heating module (10) according to claim 14, wherein said side panel (26) is mounted on slide means (47) that are slidable on a track (48), grasping means (49) being arranged to promote the panel (25) withdrawal.

16. The heating module (10) according to any one of the claims 1 to 15, said module (10) comprising means for the circulation of air within the gap (24).

17. The heating module (10) according to claim 16, wherein said air circulation means comprise ventilation means (50) and suction means (51).

18. The heating module (10) according to claim 17, wherein said ventilation means (50) are arranged on the first side panel (25) and comprise a fan (52) housed in a case (53), the case (53) comprising a baffle (54) ending in a lamellar opening (55) arranged above the reflecting surfaces (21), so as to send a flow of coolant fluid tangential to said reflecting surfaces (21).

19. The heating module (10) according to claim 17, wherein said suction means (51) are arranged below said base plate (19) and communicate with the gap (24) through openings that are present in said base plate (19).

20. The heating module (10) according to claim 19, wherein said suction means (51) comprise a suction hood (56) that is flared downwards, below which a suction device (57) is arranged, the suction device (57) being contained in a case (58) comprising a base flange (59) for securing the module (10) to the oven floor or structure.

21. The heating module (10) according to claim 19 or 20, wherein the suction flow rate of the suction means (51) is higher than the output flow rate of the ventilation means (50).

22. An oven (1) for preforms (P) comprising a plurality of heating modules (10) according to any one of the claims 1 to 21.

## Patentansprüche

1. Heizmodul (10) für Öfen (1) zum Erwärmen von Vorformlingen (P), wobei die Vorformlinge (P) einen hohlen Körper (B), einen Halsabschnitt (C) und einen Flansch (F) umfassen, welcher den hohlen Körper (B) von dem Halsabschnitt (C) trennt, wobei die Module (10) ein erstes Seitenpaneel (25) und ein zweites Seitenpaneel (26) umfassen, wobei die Seitenpaneele (25, 26) an einer Basisplatte (19) angebracht sind und zueinander weisen, um einen Spalt (24) zu erzeugen, welcher eine derartige Form und Abmessungen aufweist, um einem sich bewegenden Vorformling (P) zu erlauben, dazwischen durchzutreten, wobei die Seitenpaneele (25, 26) Infrarotlampen (23, 23') und erste und zweite Reflexionsflächen (21, 22) umfassen, welche gegenüberliegend sind und orientiert sind, um die thermalen Strahlungen an die Vorformlingsfläche weiterzuleiten, wobei die Reflexionsflächen (22) des zweiten Seitenpaneels (26) so eingerichtet sind, dass die thermalen Strahlungen die Vorformlingsfläche in einem geringen Neigungswinkel treffen, **dadurch gekennzeichnet, dass** die ersten Reflexionsflächen (21) ein Spiegelelement (21 c) umfassen, welches in dem oberen Abschnitt des ersten Seitenpaneel (25) angeordnet ist, um einen longitudinalen Hohlraum (32) zu bilden, in welchem eine Infrarotlampe (23') aufgenommen ist, wobei das Spiegelelement (21c) eine Konkavität aufweist, welche in Richtung des Abschnitts des Vorformlings (P) orientiert ist, welcher direkt unter dem Flansch (F) angeordnet ist.

2. Heizmodul (10) nach Anspruch 1, wobei die zweiten Reflexionsflächen (22), welche an dem zweiten Seitenpaneel (26) angeordnet sind, eine Mehrzahl von vertikal angeordneten Ausnehmungen (28) umfassen, wobei jede davon eine Infrarotlampe (23) aufnimmt.

3. Heizmodul (10) nach Anspruch 2, wobei jede Ausnehmung (28) einen Hohlraum (31) aufnimmt und innere Abschnitte (22a, 22b) und obere und untere Seitentafeln (22c, 22d) umfasst, welche eine Mehrzahl von parallelen Streifen (29) ausbilden.

4. Heizmodul (10) nach Anspruch 3, wobei die inneren Abschnitte (22a, 22b) an Ebenen angeordnet sind, welche entlang einer horizontalen Ecke (30) einfallen, um ein V mit einer Konkavität zu erzeugen, welche in das Innere des Hohlraums (31) weist.

5. Heizmodul (10) nach einem der Ansprüche 1 bis 4, wobei die ersten Reflexionsflächen (21), welche an dem ersten Seitenpaneel (25) angeordnet sind, erste (21 a) und zweite (21 b) Spiegelelemente umfassen, welche an Ebenen angeordnet sind, welche entlang einer vertikalen Ecke (27) einfallend sind, um ein offenes V mit einer auf den Spalt (24) weisenden Konkavität zu erzeugen.

6. Heizmodul (10) nach einem der Ansprüche 1 bis 5, wobei die Lampe (23'), welche innerhalb des longitudinalen Hohlraum (32) angeordnet ist, einen abgeschirmten Flächenabschnitt (33) aufweist, wobei der Flächenabschnitt (33) auf den Spalt (24) weist.

7. Heizmodul (10) nach einem der Ansprüche 1 bis 6, wobei ein mobiles Spiegelelement (34), welches innerhalb des Spalts (24) vorsteht und unter dem Raum angeordnet ist, welcher durch den Vorformling (P) eingenommen ist, den ersten Reflexionsflächen (21) des ersten Seitenpaneels (25) zugeordnet ist.

8. Heizmodul (10) nach Anspruch 7, wobei das mobile Spiegelelement (34) vertikal gleitbar ist und eine Spiegelstange (35) umfasst, welche in Bezug auf die longitudinale vertikale Ebene, welche den Spalt (24) schneidet, geneigt ist.

9. Heizmodul (10) nach Anspruch 8, wobei das mobile Spielelement (34) zwei Seitentafeln (36) umfasst, welche an den Enden der Spiegelstange (35) angeordnet sind, um die Seiten des ersten Seitenpaneels (25) zu flankieren, und eine vertikale Schleife (37) aufweisen, wobei Stoppmittel (38) den vertikalen Schleifen (37) und den Seiten des Paneels (25) zugeordnet sind, um das mobile Spielelement (34) gemäß der Höhe des Vorformlings (P) in der Höhe anzupassen und es an den erwünschten Punkt zu sichern.

10. Heizmodul (10) nach einem der Ansprüche 1 bis 9, wobei die ersten und zweiten Seitenpaneele (25, 26) Kühlmittel (39, 39') der Reflexionsflächen (21, 22) umfassen.

11. Heizmodul (10) nach Anspruch 10, wobei die Kühlmittel (39, 39') aus einem Kühlsystem mit einem Kühlfluid, wie beispielsweise Wasser, Glykol oder Mischungen davon, bestehen, welches in dem Paneel (25, 26) hinter den jeweiligen Reflexionsflächen (21, 22) durch einen Einlassverbinder (40a) und einen Auslassverbinder (40b) zirkuliert wird.

12. Heizmodul (10) nach einem der Ansprüche 1 bis 11, wobei die Seitenpaneele (25, 26) jeweilige Abdeckprofile (41, 42) für den Flansch (F) des Vorformlings (P) umfassen, wobei die Abdeckprofile (41, 42) einen hohlen Stab (43) umfassen, welcher eine längliche Zunge (44) aufweist, welche sich fast so weit erstreckt, dass sie mit dem Flansch (F) des Vorformlings in Kontakt tritt, wobei der hohle Stab (43) Kühlmittel umfasst, welche aus einem Kühlsystem mit einem Kühlfluid bestehen, wie beispielsweise Wasser, Glykol oder Mischungen davon, welches in dem hohlen Stab (43) durch Einlass- (45, 45') und Auslassverbinder (46, 46') zirkuliert wird.

13. Heizmodul (10) nach Anspruch 12, wobei die Abdeckprofile (41, 42) in ihrer Höhe und Breite einstellbar sind.

14. Heizmodul (10) nach einem der Ansprüche 1 bis 13, wobei das zweite Seitenpaneel (26) entfernbar ist.

15. Heizmodul (10) nach Anspruch 14, wobei das Seitenpaneel (26) an Gleitmitteln (47) angebracht ist, welche auf einer Bahn (48) gleitbar sind, wobei Greifmittel (49) dazu eingerichtet sind, den Rückzug des Paneels (25) zu fördern.

16. Heizmodul (10) nach einem der Ansprüche 1 bis 15, wobei das Modul (10) Mittel für die Zirkulation von Luft innerhalb des Spalt (24) umfasst.

17. Heizmodul (10) nach Anspruch 16, wobei die Luftzirkulationsmittel Ventilationsmittel (50) und Saugmittel (51) umfassen.

18. Heizmodul (10) nach Anspruch 17, wobei die Ventilationsmittel (50) an dem ersten Seitenpaneel (25) angeordnet sind und einen Lüfter (52) umfassen, welcher in einem Gehäuse (53) aufgenommen ist, wobei das Gehäuse (53) ein Leitblech (54) umfasst, welches in einer lamellaren Öffnung (55) endet, welche oberhalb der Reflexionsflächen (21) angeordnet ist, um einen Kühlfluidstrom tangential zu den Reflexionsflächen (21) zu befördern.

19. Heizmodul (10) nach Anspruch 17, wobei die Saugmittel (51) unterhalb der Basisplatte (19) angeordnet sind und mit dem Spalt (24) durch Öffnungen kommunizieren, welche in der Basisplatte (19) vorliegen.

20. Heizmodul (10) nach Anspruch 19, wobei die Saugmittel (51) eine Saughaube (56) umfassen, welche nach unten aufgebördelt ist, unterhalb derer eine Saugvorrichtung (57) angeordnet ist, wobei die Sauvorrichtung (57) in einem Gehäuse (58) enthalten ist, welches einen Basisflansch (59) zum Sichern des Moduls (10) an den Ofenboden oder die Ofenstruktur umfasst.

21. Heizmodul (10) nach Anspruch 19 oder 20, wobei die Sauströmungsrate der Saugmittel (51) höher ist als die Ausgabeströmungsrate der Ventilationsmittel (50).

22. Ofen (1) für Vorformlinge (P) umfassend eine Mehrzahl von Heizmodulen (10) nach einem der Ansprüche 1 bis 21.

## Revendications

1. Module de chauffage (10) pour fours (1) pour chauffer des préformes (P), dans lequel lesdites préformes (P) comprennent un corps creux (B), un col (C) et une collerette (F) séparant le corps creux (B) du col (C), ledit module (10) comprenant un premier panneau latéral (25) et un second panneau latéral (26), lesdits panneaux latéraux (25, 26) étant montés sur une embase (19) et se faisant face, de manière à créer un intervalle (24) ayant une forme et des dimensions adaptées pour laisser passer une préforme mobile (P) entre eux, dans lequel lesdits panneaux latéraux (25, 26) comprennent des lampes infrarouges (23, 23') et une première et une seconde surfaces réfléchissantes (21, 22) qui sont opposées et orientées de manière à envoyer les radiations thermiques à la surface de la préforme, dans lequel les surfaces réfléchissantes (22) du second panneau latéral (26) sont configurées de sorte que les radiations thermiques frappent la surface de la préforme avec un petit angle d'incidence, **caractérisé en ce que** lesdites premières surfaces réfléchissantes (21) comprennent un élément miroir (21c) disposé dans la partie supérieure du premier panneau latéral (25) pour former une cavité longitudinale (32) dans laquelle une lampe infrarouge (23') est logée, dans lequel ledit élément miroir (21c) présente une concavité orientée vers la partie de la préforme (P) disposée immédiatement sous la collerette (F).

2. Module de chauffage (10) selon la revendication 1, dans lequel lesdites secondes surfaces réfléchissantes (22) disposées sur le second panneau latéral (26) comprennent une pluralité de niches (28) disposées verticalement, chacune d'elles logeant une lampe infrarouge (23).

3. Module de chauffage (10) selon la revendication 2, dans lequel chaque niche (28) loge une cavité (31) et comprend des parties internes (22a, 22b) et des crédences (22c, 22d) supérieures et inférieures formant une pluralité de tablettes parallèles (29).

4. Module de chauffage (10) selon la revendication 3, dans lequel lesdites parties internes (22a, 22b) sont disposées sur des plans incidents le long d'un coin horizontal (30), créant ainsi un V avec une concavité faisant face à l'intérieur de la cavité 31.

5. Module de chauffage (10) selon l'une quelconque des revendications 1 à 4, dans lequel les premières surfaces réfléchissantes (21) disposées sur le premier panneau latéral (25) comprennent un premier (21a) et un second (21b) élément miroir disposés sur des plans incidents le long d'un coin vertical (27), créant ainsi un V ouvert avec une concavité faisant face à l'intervalle (24).

6. Module de chauffage (10) selon l'une quelconque des revendications 1 à 5, dans lequel ladite lampe infrarouge (23') disposée à l'intérieur de la cavité longitudinale (32) a une partie de sa surface occultée (33), ladite partie (33) faisant face à l'intervalle (24).

7. Module de chauffage (10) selon l'une quelconque des revendications 1 à 6, dans lequel un élément miroir mobile (34) saillant dans l'intervalle (24) et situé sous l'espace occupé par la préforme (P) est associé à la première surface réfléchissante (21) dudit premier panneau latéral (25).

8. Module de chauffage (10) selon la revendication 7, dans lequel ledit élément miroir mobile (34) peut coulisser verticalement et comprend une barre de miroir (35), inclinée par rapport au plan longitudinal vertical en intersection avec l'intervalle (24).

9. Module de chauffage (10) selon la revendication 8, dans lequel l'élément miroir mobile (34) comprend deux panneaux latéraux (36) disposés aux extrémités de la barre de miroir (35), de sorte qu'ils flanquent les côtés du premier panneau latéral (25), et une boucle verticale (37), un moyen d'arrêt (butée) (38) étant associé à ladite boucle verticale (37) et aux côtés du panneau (25) de manière à ajuster en hauteur l'élément miroir mobile (34) en fonction de la hauteur de la préforme (P) et à le fixer au point désiré.

10. Module de chauffage (10) selon l'une quelconque des revendications 1 à 9, dans lequel les premier et second panneaux latéraux (25, 26) comprennent un moyen de refroidissement (39, 39') des surfaces réfléchissantes (21, 22).

11. Module de chauffage (10) selon la revendication 10, dans lequel lesdits moyens de refroidissement (39, 39') consistent en un système de refroidissement doté d'un liquide réfrigérant tel que l'eau, le glycol, ou tout mélange des deux, qui circule dans le panneau (25, 26), derrière les surfaces réfléchissantes respectives (21, 22), via un connecteur d'entrée (40a) et un connecteur de sortie (40b).

12. Module de chauffage (10) selon l'une quelconque des revendications 1 à 11, dans lequel les panneaux latéraux (25, 26) comprennent des profils blindés respectifs (41, 42) pour la collerette (F) de la préforme (P), lesdits profils blindés (41, 42) comprenant une barre creuse (43) dotée d'une langue allongée (44) s'étendant jusqu'à presque toucher la collerette (F) de la préforme, dans lequel ladite barre creuse (43) comprend un moyen de refroidissement doté d'un liquide réfrigérant tel que l'eau, le glycol, ou tout mélange des deux, qui circule dans la barre creuse (43) via des connecteurs d'entrée (45, 45') et de sortie (46, 46').

13. Module de chauffage (10) selon la revendication 12, dans lequel lesdits profils blindés (41, 42) sont ajustables en hauteur et en largeur.

14. Module de chauffage (10) selon l'une quelconque des revendications 1 à 13, dans lequel ledit second panneau latéral (26) est amovible.

15. Module de chauffage (10) selon la revendication 14, dans lequel le panneau latéral (26) est monté sur des moyens de coulissement (47) qui peuvent coulisser sur une glissière (48), un moyen de préhension (49) étant disposé pour permettre le retrait du panneau (25).

16. Module de chauffage (10) selon l'une quelconque des revendications 1 à 15, ledit module (10) comprenant un moyen pour la circulation de l'air au sein de l'intervalle (24).

17. Module de chauffage (10) selon la revendication 16, dans lequel ledit moyen de circulation de l'air comprend des moyens de ventilation (50) et des moyens d'aspiration (51).

18. Module de chauffage (10) selon la revendication 17, dans lequel lesdits moyens de ventilation (50) sont disposés sur le premier panneau latéral (25) et comprennent un ventilateur (52) logé dans un boîtier (53), ledit boîtier (53) comprenant un pare-feu (54) se terminant par une ouverture lamellaire (55) disposée au-dessus des surfaces réfléchissantes (21), de manière à envoyer un flux de liquide réfrigérant tangentiellement aux surfaces réfléchissantes (21).

19. Module de chauffage (10) selon la revendication 17, dans lequel lesdits moyens d'aspiration (51) sont disposés au-dessous de ladite embase (19) et communiquent avec l'intervalle (24) par des ouvertures qui sont présentes dans ladite embase (19).

20. Module de chauffage (10) selon la revendication 19, dans lequel lesdits moyens d'aspiration (51) comprennent une hotte aspirante (56) qui est évasée vers le bas, sous laquelle est disposé un dispositif d'aspiration (57), le dispositif d'aspiration (57) étant contenu dans un boîtier (58) comprenant une bride de base (59) pour fixer le module (10) à la sole ou la structure du four.

21. Module de chauffage (10) selon la revendication 19 ou 20, dans lequel le débit d'aspiration du moyen d'aspiration (51) est supérieur au débit de sortie du moyen de ventilation (50).

22. Four (1) pour préformes (P) comprenant une pluralité de modules de chauffage (10) selon l'une quelconque des revendications 1 à 21.
